# EUROPEAN PATENT APPLICATION

(11) **EP 2 542 003 A1**
(43) Date of publication of application: **02.01.2013**
(21) Application number: 10848768.7
(22) Date of filing: 13.12.2010
(51) Int. Cl.: H04W 72/04, H04W 36/14, H04W 4/12

(54) **METHOD FOR TRANSMITTING CAPABILITY OF USER EQUIPMENT, METHOD AND SYSTEM FOR RELOCATION AND INTER-SYSTEM HANDOVER**

(30) Priority: 30.03.2010 CN 201010155414
(71) Applicant: ZTE Corporation, Shenzhen, Guangdong 518057 (CN)
(72) Inventor: YU, Bo, Shenzhen Guangdong 518057 (CN); HE, Meifang, Shenzhen Guangdong 518057 (CN); SHI, Lirong, Shenzhen Guangdong 518057 (CN)
(74) Representative: Manitz, Finsterwald & Partner GbR
(86) International application number: PCT/CN2010/079711
(87) International publication number: WO 2011/120310

(57) **Abstract**

A method and system for transmitting a capability of a terminal supporting multi-carrier multiple-input multiple-output, a method and system for a relocation and an inter-system handover are disclosed in the present invention. The method for transmitting the capability of the terminal supporting multi-carrier MIMO includes: when a User Equipment (UE) supports multi-carrier, carrying the capability of the UE supporting the number of downlink carriers configured as Multiple-Input Multiple-Output (MIMO) in interaction message interacted with a Radio Network Controller (RNC) to send to the RNC; and, the RNC acquiring the capability of the UE supporting the number of downlink carriers configured as MIMO according to the interaction message, and allocating resources for the UE according to the acquired capability of the UE supporting the number of downlink carriers configured as MIMO. With the present invention, a network side is enabled to acquire the capability of the UE supporting the number of downlink carriers configured as MIMO and allocate the resources reasonably according to the capability.

## Description

### Technical Field

The present invention relates to the field of communication technology, and specifically, to a method for transmitting the capability of a terminal, a method and system for a relocation and an inter-system handover.

### Background of the Related Art

In an R7 stage, a Universal Mobile Telecommunications System (UMTS) introduces Multiple-Input Multiple-Output (MIMO) technology. In an R8 stage, Dual Carrier (DC) is introduced, but a User Equipment (UE) does not support the MIMO and DC simultaneously. In an R9 stage, the UE can support the MIMO and DC simultaneously, and use a Dual cell MIMO support cell to indicate whether the UE supports the MIMO and DC simultaneously. The introduction of these characteristics increases a transmission rate greatly.

In order to further increase a user peak rate, more carriers need to be combined together for transmission, and meanwhile, MIMO can be configured on each downlink carrier. However, with regard to different UEs, the number of downlink carriers supported by the UE is different from the number of downlink carriers which can be configured as MIMO. For example, the maximum the number of downlink carriers supported by some UE is 4, however when the multi-carrier are used, the UE can not use the MIMO; and the maximum number of downlink carriers supported by some UE is 3, however when the multi-carrier are used, only one downlink carrier supports the configuration of MIMO.

The existing Dual cell MIMO support cell of the current protocol can not indicate the maximum number of downlink carriers configured as MIMO supported by the UE when the UE supports the multi-carrier. Therefore, a network side can not configure MIMO parameters for the UE accurately, thereby failing to allocate resources reasonably. For example, even though the maximum number of downlink carriers supported by the UE is 4, and the 4 downlink carriers all can be configured as MIMO, according to the processing of the current protocol, in the case of sufficient network resources, the network side also will not configure the MIMO for the UE on all the 4 downlink carriers generally, which can not allocate the resources fully and reasonably and can not increase a downlink transmission rate effectively.

In conclusion, the related art has following technical problems.
1) the network side can not accurately acquire the capability of the UE supporting the multi-carrier, namely, the capability of the UE supporting the number of downlink carriers configured as MIMO, therefore, MIMO parameters can not be configured for the UE accurately, thereby failing to allocate the resources reasonably.
2) when the UE performs a relocation, including a relocation related to UE and a relocation unrelated to UE, between two Radio Network Controllers (RNCs), the relocation or a destination network side can not acquire the capability of the UE supporting the number of downlink carriers configured as MIMO, thereby failing to allocate the resources reasonably.
3) when an inter-system handover occurs in the UE , the destination network side also needs to acquire the capability of the UE supporting the number of downlink carriers configured as MIMO, thereby allocating the resources for the UE reasonably.

### Summary of the Invention

The object of the present invention is to provide a method and system for transmitting the capability of a terminal supporting multi-carrier multiple-input multiple-output, to enable a network side to acquire the capability of a UE, which supports multi-carrier, supporting the number of downlink carriers configured as MIMO and allocate resources reasonably according to the capability, which increases a transmission rate effectively.

In order to solve the above problems, the present invention provides a method for transmitting a capability of a terminal supporting multi-carrier multiple-input multiple-output, which comprises:
when a User Equipment (UE) supports multi-carrier, carrying the capability of the UE supporting the number of downlink carriers configured as Multiple-Input Multiple-Output (MIMO) in interaction message with a Radio Network Controller (RNC) to send to the RNC; and
the RNC acquiring the capability of the UE supporting the number of downlink carriers configured as MIMO according to the interaction message, and allocating resources for the UE according to the acquired capability of the UE supporting the number of downlink carriers configured as MIMO;
wherein, the UE supporting the multi-carrier refers to: the UE supporting 3-carrier or 4-carrier.

The interaction message with the RNC can comprise: radio resource control connection request message, radio resource control connection setup complete message and UE capability information message.

The step of sending the capability of the UE supporting the number of downlink carriers configured as MIMO to the RNC can comprise: adding an indication cell for the capability of the UE supporting the number of downlink carriers configured as MIMO in the radio resource control connection request message, and carrying the capability of the UE supporting the number of downlink carriers configured as MIMO through the indication cell.

The indication cell can be a Multi MIMO Support cell, or a Dual cell MIMO support extension cell, or a Multi Carrier and MIMO Support cell;
the step of adding an indication cell in the radio resource control connection request message, and carrying the capability of the UE supporting the number of downlink carriers configured as MIMO through the indication cell can comprise:
carrying the Multi MIMO Support cell in the radio resource control connection request message to indicate the number of the downlink carriers configured as MIMO supported by the UE; or,
carrying the Dual cell MIMO support extension cell in the radio resource control connection request message to indicate that the number of the downlink carriers configured as MIMO supported by the UE is 3 or 4; or,
carrying the Multi Carrier and MIMO Support cell in the radio resource control connection request message to indicate the capability of the UE supporting the multi-carrier and supporting the number of the downlink carriers configured as MIMO.

The step of sending the capability of the UE supporting the number of downlink carriers configured as MIMO to the RNC can comprise:
extending a Dual cell MIMO support cell in the radio resource control connection request message, and carrying the capability of the UE supporting the number of downlink carriers configured as MIMO through the extended Dual cell MIMO support cell.

The step of sending the capability of the UE supporting the number of downlink carriers configured as MIMO to the RNC can comprise:
extending a grade of a High-Speed Downlink Shared Channel (HS-DSCH) physical layer category in the radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

The present invention further provides a system for transmitting a capability of a terminal supporting multi-carrier multiple-input multiple-output, which comprises: a UE and an RNC, the UE comprises a multi-carrier capability transmission unit, and the RNC comprises a multi-carrier capability acquisition unit and a resource allocation unit, wherein:
the multi-carrier capability transmission unit is configured to: when the UE supports multi-carrier, carry the capability of the UE supporting a number of downlink carriers configured as MIMO in interaction message with the RNC to send to the RNC;
the multi-carrier capability acquisition unit is configured to: according to the interaction message, acquire the capability of the UE supporting the number of downlink carriers configured as MIMO to send to the resource allocation unit; and
the resource allocation unit is configured to: according to the capability of the UE supporting the number of downlink carriers configured as MIMO acquired by the multi-carrier capability acquisition unit, allocate resources for the UE.
wherein, the UE supporting the multi-carrier refers to: the UE supporting 3-carrier or 4-carrier.

The multi-carrier capability transmission unit can be configured to send the capability of the UE supporting the number of downlink carriers configured as MIMO to the RNC by the following way:
adding an indication cell for the capability of the UE supporting the number of downlink carriers configured as MIMO in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of HS-DSCH physical layer category.

Another object of the present invention is to provide a method and system for a relocation and an inter-system handover, wherein a source radio network access system transmits the capability of the UE supporting the number of downlink carriers configured as MIMO to a destination radio network access system, such that a relocated or handed-over destination network side knows accurately the number of downlink carriers configured as MIMO supported by the UE and allocates resources reasonably according to this.

In order to solve the above problems, the present invention provides a relocation method, which comprises: when a source radio network access system in which a UE supporting multi-carrier is located acquires a capability of the UE supporting the number of downlink carriers configured as MIMO and decides to initiate a relocation, initiating relocation requirement message to a core network, or initiating relocation request message to a destination radio network access system, and adding the capability of the UE supporting the number of downlink carriers configured as MIMO in a radio resource control container contained in a transparent container from a source radio network controller to a destination radio network controller carried in the relocation requirement message or relocation request message;
if the core network receives the relocation requirement message, initiating the relocation request message to the destination radio network access system, and containing the capability of the UE supporting the number of downlink carriers configured as MIMO in the radio resource control container contained in the transparent container from the source radio network controller to the destination radio network controller carried in the relocation request message; and
the destination radio network access system acquiring the capability of the UE supporting the number of downlink carriers configured as MIMO according to the relocation request message initiated by the source radio network access system or core network.

The multi-carrier is 3-carrier or 4-carrier.

The above method can further comprise: the source radio network access system acquiring the capability of the UE supporting the number of downlink carriers configured as MIMO by the following way:
when the UE supports the 3-carrier or 4-carrier, carrying the capability of the UE supporting the number of downlink carriers configured as MIMO in interaction message with an RNC to send to the source radio network access system;
the source radio network access system acquiring the capability of the UE supporting the number of downlink carriers configured as MIMO according to the interaction message.

The UE can send the capability of the UE supporting the number of downlink carriers configured as MIMO to the source radio network access system by the following way:
adding an indication cell for the capability of the UE supporting the number of downlink carriers configured as MIMO in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

The present invention further provides a relocation system, which comprises: a source radio network access system, a core network and a destination radio network access system, the source radio network access system comprises a multi-carrier capability transmission unit, and the destination radio network access system comprises a multi-carrier capability acquisition unit, wherein:
the multi-carrier capability transmission unit is configured to: when a capability of a UE, which supports multi-carrier, supporting a number of downlink carriers configured as MIMO is acquired and it is to decide to initiate a relocation, initiate relocation requirement message to the core network, or initiate relocation request message to the destination radio network access system, and add the capability of the UE supporting the number of downlink carriers configured as MIMO in a radio resource control container contained in a transparent container from a source radio network controller to a destination radio network controller carried in the relocation requirement message or relocation request message;
the core network is configured to: if the relocation requirement message is received, initiate the relocation request message to the destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message initiated by the source radio network access system or core network, acquire the capability of the UE supporting the number of downlink carriers configured as MIMO.

Wherein, the multi-carrier is 3-carrier or 4-carrier.

The present invention further provides an inter-system handover method, which is applied to a case of a UE handing over from a Global System for Mobile Communications (GSM) to a Universal Mobile Telecommunications System (UMTS) radio network access system, and the method comprises:
the GSM system initiating handover requirement message to a core network, and adding a capability of the UE supporting a number of downlink carriers configured as MIMO in a radio resource control container contained in a transparent container from a source radio network controller to a destination radio network controller carried in the handover requirement message;
the core network initiating relocation request message to the UMTS radio network access system after receiving the handover requirement message, and containing the capability of the UE supporting the number of downlink carriers configured as MIMO in the radio resource control container contained in the transparent container from the source radio network controller to the destination radio network controller carried in the relocation request message; and
the UMTS radio network access system acquiring the capability of the UE supporting the number of downlink carriers configured as MIMO according to the relocation request message.

The method can further comprise: the GSM system acquiring the capability of the UE supporting the number of downlink carriers configured as MIMO by the following way:
when the UE supports multi-carrier, carrying the capability of the UE supporting the number of downlink carriers configured as MIMO in interaction message with an RNC to send to the GSM system;
the GSM system acquiring the capability of the UE supporting the number of downlink carriers configured as MIMO according to the interaction message;
wherein, the UE supporting the multi-carrier refers to: the UE supporting 3-carrier or 4-carrier.

The UE can send the capability of the UE supporting the number of downlink carriers configured as MIMO to the GSM system by the following way:
adding an indication cell for the capability of the UE supporting the number of downlink carriers configured as MIMO in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

The present invention further provides an inter-system handover device, which is applied to a case of a UE handing over from a GSM system to a UMTS radio network access system, and the handover device comprises: the GSM system, a core network and the UMTS radio network access system, wherein, the GSM system comprises a multi-carrier capability transmission unit, and the UMTS radio network access system comprises a multi-carrier capability acquisition unit,
the multi-carrier capability transmission unit is configured to: initiate handover requirement message to the core network, and add a capability of the UE supporting a number of downlink carriers configured as MIMO in a radio resource control container contained in a transparent container from a source radio network controller to a destination radio network controller carried in the handover requirement message;
the core network is configured to: after receiving the handover requirement message, initiate relocation request message to a destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message, acquire the capability of the UE supporting the number of downlink carriers configured as MIMO.

The present invention further provides an inter-system handover method, which is applied to a case of a UE handing over from a Long Term Evolution (LTE) system to a UMTS radio network access system, and the method comprises:
the LTE system initiating handover requirement message to a core network, adding a capability of the UE supporting a number of downlink carriers configured as MIMO in a radio resource control container contained in a transparent container from a source radio network controller to a destination radio network controller carried in the handover requirement message;
the core network initiating relocation request message to the UMTS radio network access system after receiving the handover requirement message, and containing the capability of the UE supporting the number of downlink carriers configured as MIMO in the radio resource control container contained in the transparent container from the source radio network controller to the destination radio network controller carried in the relocation request message; and
the UMTS radio network access system acquiring the capability of the UE supporting the number of downlink carriers configured as MIMO according to the relocation request message.

The method can further comprise: the LTE system acquiring the capability of the UE supporting the number of downlink carriers configured as MIMO by the following way:
when the UE supports multi-carrier, carrying the capability of the UE supporting the number of downlink carriers configured as MIMO in interaction message with an RNC to send to the LTE system;
the LTE system acquiring the capability of the UE supporting the number of downlink carriers configured as MIMO according to the interaction message;
wherein, the UE supporting the multi-carrier refers to: the UE supporting 3-carrier or 4-carrier.

The UE can send the capability of the UE supporting the number of downlink carriers configured as MIMO to the LTE system by the following way:
adding an indication cell for the capability of the UE supporting the number of downlink carriers configured as MIMO in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

The present invention further provides an inter-system handover device, which is applied to a case of a UE handing over from an LTE system to a UMTS radio network access system, and the handover device comprises: the LTE system, a core network and the UMTS radio network access system, wherein, the LTE system comprises a multi-carrier capability transmission unit, and the UMTS radio network access system comprises a multi-carrier capability acquisition unit,
the multi-carrier capability transmission unit is configured to: initiate handover requirement message to the core network, and add a capability of the UE supporting a number of downlink carriers configured as MIMO in a radio resource control container contained in a transparent container from a source radio network controller to a destination radio network controller carried in the handover requirement message;
the core network is configured to: after receiving the handover requirement message, initiate relocation request message to a destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message, acquire the capability of the UE supporting the number of downlink carriers configured as MIMO.

In conclusion, the present invention at least has following beneficial effects:
with the method and system of the present invention, it enables the network side to acquire the capability of the UE supporting the number of downlink carriers configured as MIMO and allocate the resources reasonably according to the capability. For example, when the network resources are satisfied, the network side can allocate resources which satisfy the maximum capacity of downlink transmission of the UE to the UE, the number of downlink carriers configured to the UE is the maximum number of downlink carriers supported by the carrier capability of the UE, and the number of downlink carriers of MIMO is configured as the number of downlink carriers supporting the configuration of MIMO, so as to make a downlink rate of the UE reach a maximum value supported by the capability of the UE;
when the UE performs the relocation between two RNCs, or the UE hands over from a Global System for Mobile Communications (GSM) to a Universal Mobile Telecommunications System (UMTS) or hands over from a Long Term Evolution (LTE) system to the UMTS, such that the relocated or handed-over destination network side knows accurately the number of downlink carriers configured as MIMO supported by the UE and allocates the resources reasonably according to it. For example, when the network resources are satisfied, the network side can allocate resources which satisfy the maximum capacity of downlink transmission of the UE to the UE, the number of downlink carriers configured to the UE is the maximum number of downlink carriers supported by the carrier capability of the UE, and the number of downlink carriers of MIMO is configured as the maximum number of downlink carriers supporting the configuration of MIMO, so as to make the downlink rate of the UE reach the maximum value supported by the capability of the UE.

### Brief Description of Drawings

FIG. 1 is a flow diagram of method for transmitting the capability of the UE supporting the number of downlink carriers configured as MIMO according to the embodiment one of the present invention.
FIG. 2 is a flow diagram of method for transmitting the capability of the UE supporting the number of downlink carriers configured as MIMO according to the embodiment two of the present invention.
FIG. 3 is a flow diagram of method for transmitting the capability of the UE supporting the number of downlink carriers configured as MIMO according to the embodiment three of the present invention.
FIG. 4 is a flow diagram of method for transmitting the capability of the UE supporting the number of downlink carriers configured as MIMO according to the embodiment four of the present invention.
FIG. 5 is a flow diagram of method for transmitting the capability of the UE supporting the number of downlink carriers configured as MIMO according to the embodiment five of the present invention.
FIG. 6 is a flow diagram of method for transmitting the capability of the UE supporting the number of downlink carriers configured as MIMO according to the embodiment six of the present invention.
FIG. 7 is a flow diagram of a relocation method according to the embodiment seven of the present invention.
FIG. 8 is a flow diagram of a relocation method according to the embodiment eight of the present invention.
FIG. 9 is a flow diagram of an inter-system handover method according to the embodiment nine of the present invention.
FIG. 10 is a flow diagram of an inter-system handover method according to the embodiment ten of the present invention.

### Preferred Embodiments of the Present Invention

One of the objects of the present invention is to provide a solution, which enables a network side to acquire the capability of a UE supporting the number of downlink carriers configured as MIMO and allocate resources reasonably according to the capability.

In order to achieve the foregoing objects, the core idea of the present invention is: providing a technical scheme for transmitting the capability of a UE supporting the number of downlink carriers configured as MIMO, when the UE supports multi-carrier, carrying the capability of the UE, which supports the multi-carrier, supporting the number of downlink carriers configured as MIMO in interaction message with an RNC to send to the RNC; and the RNC acquiring the capability of the UE supporting the number of downlink carriers configured as MIMO according to the interaction message received from the UE. Wherein, message is interacted between the RNC and UE through an Uu interface, therefore, the interaction message between the RNC and UE is also called as an Uu interface message.

Furthermore, there may be various ways for transmitting the capability of the UE supporting the number of downlink carriers configured as MIMO, which include but are not limited to the following:
1. Adding an indication cell for the capability of the UE supporting the number of downlink carriers configured as MIMO in Radio Resource Control (RRC) Connection Request message, and when the UE supports the multi-carrier, carrying the indication cell in the RRC Connection Request message to send to the RNC;
2. Adding an indication cell for the capability of the UE supporting the number of downlink carriers configured as MIMO in a Radio Resource Control (RRC) Connection Request message, and when the UE supports the multi-carrier and the number of downlink carriers configured as MIMO supported by the UE is 3 and 4, carrying the indication cell in the RRC Connection Request message to send to the RNC;
3. Extending a Dual cell MIMO support cell for the capability of the UE supporting dual-carrier and MIMO in an R8 protocol, and using an extended value to indicate the capability of the UE supporting the number of downlink carriers configured as MIMO; and when the UE supports the multi-carrier, carrying the extended cell in the RRC Connection Request message to send to the RNC;
4. Extending a grade of a High-Speed Downlink Shared Channel (HS-DSCH) physical layer category, and appending a capability grade of the UE supporting the number of downlink carriers configured as MIMO; and when the UE supports the multi-carrier, carrying the extended HS-DSCH physical layer category in Radio Resource Control (RRC) Connection Setup Complete message or UE Capability Information message to send to the RNC; and
5. Adding an indication cell which can indicate the capability of the UE supporting multi-carrier and supporting the number of downlink carriers configured as MIMO simultaneously in Radio Resource Control (RRC) Connection Request message, and when the UE supports the multi-carrier, carrying the indication cell in the RRC Connection Request message to send to the RNC.

The above method for transmitting the capability of the UE supporting the multi-carrier will be further described in detail in combination with the accompanying drawings and specific embodiments below.

### Embodiment one

In the embodiment, an indication cell for the capability of a UE supporting the number of downlink carriers configured as MIMO is added in RRC Connection Request message, which is used to indicate the capability of the UE supporting the number of downlink carriers configured as MIMO.

In the embodiment, the indication cell can be a Multi MIMO Support cell.

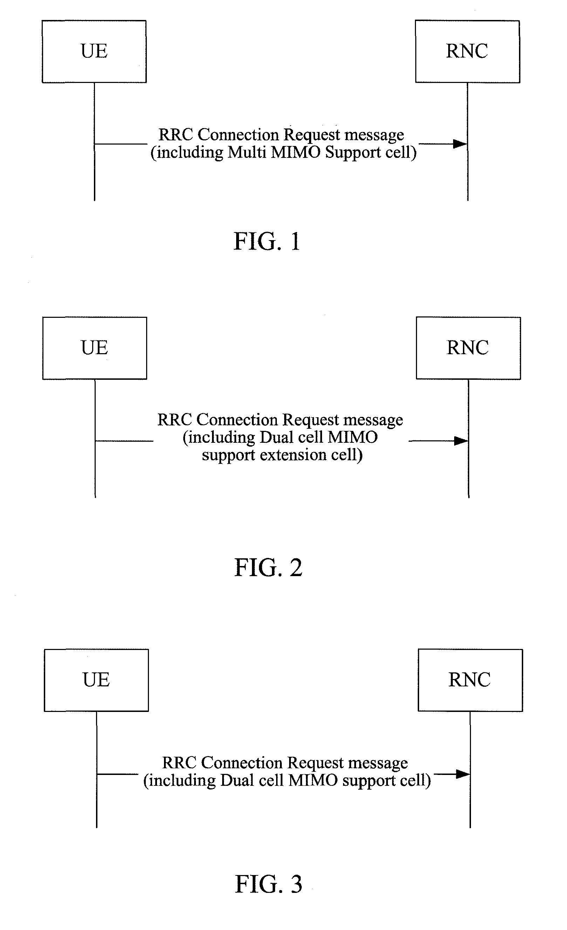

As shown in FIG. 1, the method for transmitting the capability of the UE supporting the multi-carrier in the embodiment is described as follows.

The Multi MIMO Support cell, which indicates the number of downlink carriers configured as MIMO supported by the UE, is contained in the RRC Connection Request message sent to an RNC by the UE supporting the multi-carrier capability.

The RNC parses the received RRC Connection Request message, and according to the Multi MIMO Support cell in the message, it can acquire the number of downlink carriers configured as MIMO supported by the UE sending the message.

In the embodiment, a protocol description of the Multi MIMO Support cell is as shown in Table 1 below.

**Table 1 Multi MIMO Support cell protocol description**

| Information Element/ Group name | Need | Multi | Type and reference | Semantics description |
|---|---|---|---|---|
| Multi MIMO Support | OP | | Enumerated(Single, Dual, Three, Four) | The absence of this IE indicates that the UE does not support Multi carrier with MIMO |

With reference to Table 1, a specific implementation of the Multi MIMO Support indication cell is as follows:
if the number of downlink carriers configured as MIMO supported by the UE is 0, the UE does not carry the Multi MIMO Support cell;
if the number of downlink carriers configured as MIMO supported by the UE is 1, the UE sets the Multi MIMO Support cell as Single, and an actual value is 0;
if the number of downlink carriers configured as MIMO supported by the UE is 2, the UE sets the Multi MIMO Support cell as Dual, and an actual value is 1;
if the number of downlink carriers configured as MIMO supported by the UE is 3, the UE sets the Multi MIMO Support cell as Three, and an actual value is 2; and
if the number of downlink carriers configured as MIMO supported by the UE is 4, the UE sets the Multi MIMO Support cell as Four, and an actual value is 3.

The RNC parses the received RRC Connection Request message, and according to the value of the Multi MIMO Support cell in the message, it can acquire the capability of the UE, which sends the message, supporting the number of downlink carriers configured as MIMO.

If the UE does not support the multi-carrier, the Multi MIMO Support cell is not contained by the UE in the RRC Connection Request message sent to the RNC.

### Embodiment two

In the embodiment, an indication cell for the capability of a UE supporting the number of downlink carriers configured as MIMO is added in RRC Connection Request message, which is used to indicate the capability of the UE supporting the number of downlink carriers configured as MIMO.

In the embodiment, the indication cell can be a Dual cell MIMO support extension cell, which indicates the number of downlink carriers configured as MIMO supported by the UE.

As shown in FIG. 2, the method for transmitting the capability of the UE supporting the multi-carrier in the embodiment is described as follows.

When the number of downlink carriers configured as MIMO supported by the UE is 3 and 4, the Dual cell MIMO support extension cell is contain by the UE supporting the multi-carrier capability in the RRC Connection Request message sent to an RNC.

The RNC parses the received RRC Connection Request message, and according to the Dual cell MIMO support extension cell in the message, it can acquire the number of downlink carriers configured as MIMO supported by the UE sending the message.

In the embodiment, a protocol description of the Dual cell MIMO support extension cell is as shown in Table 2 below.

**Table 2 Multi MIMO Support extension cell protocol description**

| Information Element/ Group name | Need | Multi | Type and reference | Semantics description |
|---|---|---|---|---|
| Dual cell MIMO support extension | OP | | Enumerated (Three, Four) | The absence of this IE indicates that the number of carrier with MIMO UE support not over 2 |

With reference to Table 2, a specific implementation of the Dual cell MIMO support extension indication cell is as follows:
if the number of downlink carriers configured as MIMO supported by the UE is 3, the UE sets the Dual cell MIMO support extension cell as Three, and an actual value is 0;
if the number of downlink carriers configured as MIMO supported by the UE is 4, the UE sets the Dual cell MIMO support extension cell as Four, and an actual value is 1.

The RNC parses the received RRC Connection Request message, and according to the value of the Dual cell MIMO support extension cell in the message, it can acquire the capability of the UE, which sends the message, supporting the number of downlink carriers configured as MIMO.

If the UE does not support the multi-carrier, the UE does not contain the Dual cell MIMO support extension cell in the RRC Connection Request message sent to the RNC; when the UE supports the multi-carrier, but the number of downlink carriers configured as MIMO supported by the UE is less than or equal to 2, the Dual cell MIMO support extension cell is not contained by the UE in the RRC Connection Request message sent to the RNC.

### Embodiment three

In the embodiment, a value of a Dual cell MIMO support cell in an RRC Connection Request message is extended, and the capability of a UE supporting multi-carrier is indicated through the extended value of the Dual cell MIMO support cell.

As shown in FIG. 3, the method for transmitting the capability of the UE supporting the multi-carrier in the embodiment is described as follows.

The UE supporting the multi-carrier capability contains the Dual cell MIMO support cell in the RRC Connection Request message sent to an RNC, and the value is the number of downlink carriers configured as MIMO supported by the UE.

The RNC parses the received RRC Connection Request message, and according to the Dual cell MIMO support cell in the message, it can acquire the number of downlink carriers configured as MIMO supported by the UE sending the message.

In the embodiment, a protocol description of the Dual cell MIMO support cell is as shown in Table 3 below.

**Table 3 Dual cell MIMO support cell protocol description**

| Information Element/ Group name | Need | Multi | Type and reference | Semantics description |
|---|---|---|---|---|
| Dual cell MIMO support | OP | | Enumerated (Dual, Single, Three, Four) | The absence of this IE indicates that the UE does not support Dual or Multi carrier with MIMO |

With reference to Table 3, a specific implementation of the Dual cell MIMO support cell is as follows:
if the number of downlink carriers configured as MIMO supported by the UE is 0, the UE does not carry the Dual cell MIMO support cell;
if the number of downlink carriers configured as MIMO supported by the UE is 1, the UE sets the Dual cell MIMO support cell as Single, and an actual value is 1;
if the number of downlink carriers configured as MIMO supported by the UE is 2, the UE sets the Dual cell MIMO support cell as Dual, and an actual value is 0;
if the number of downlink carriers configured as MIMO supported by the UE is 3, the UE sets the Dual cell MIMO support cell as Three, and an actual value is 2; and
if the number of downlink carriers configured as MIMO supported by the UE is 4, the UE sets the Dual cell MIMO support cell as Four, and an actual value is 3.

The RNC parses the received RRC Connection Request message, and according to the value of the Dual cell MIMO support cell in the message, it can acquire the capability of the UE which sends the message, supporting the number of downlink carriers configured as MIMO.

If the UE does not support the multi-carrier, but supports the dual-carrier and configures the MIMO at the same time, the Dual cell MIMO support cell is also carried (in this case, the original processing of the protocol is to enumerate true, and an actual value is 0). When the UE supports the multi-carrier, and the number of downlink carriers configured as MIMO supported by the UE is 2, the value of the Dual cell MIMO support cell is Dual, and an actual value is 0.

### Embodiment four

In the embodiment, an indication cell which indicates the capability of a UE supporting the multi-carrier and supporting the number of downlink carriers configured as MIMO simultaneously is added in RRC Connection Request message, which is used to indicate the capability of the UE supporting the multi-carrier and supporting the number of downlink carriers configured as MIMO simultaneously.

The indication cell can be a Multi Carrier And MIMO Support cell.

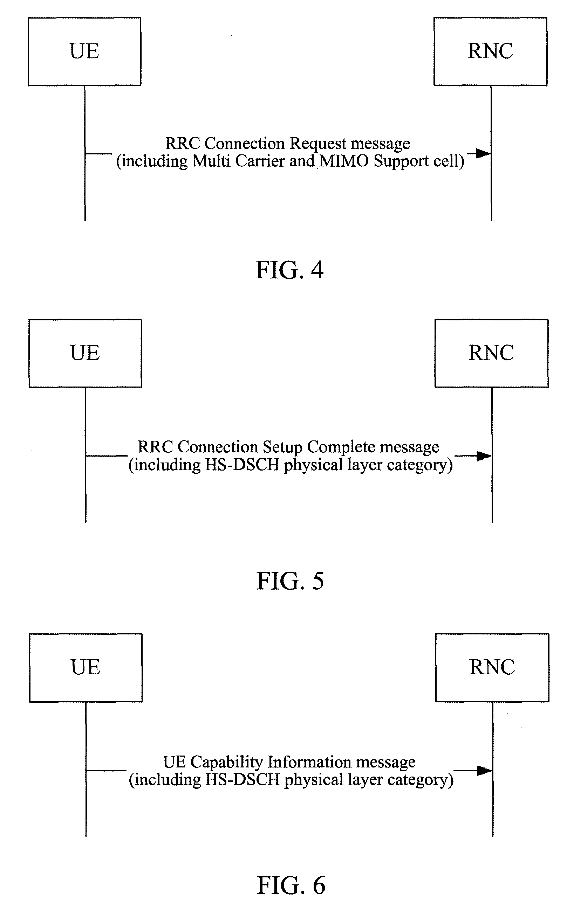

As shown in FIG. 4, the method for transmitting the capability of the UE supporting the multi-carrier in the embodiment is described as follows.

The Multi Carrier And MIMO Support cell is contained by UE supporting the multi-carrier capability in the RRC Connection Request message sent to an RNC, which is used to indicate the capability of the UE supporting the multi-carrier and supporting the number of downlink carriers configured as MIMO simultaneously, a value of the cell is one index value in the first column as shown in Table 5, and according to the number of downlink carriers configured as high speed and the number of downlink carriers configured as MIMO supported by the UE, the UE queries the Table 5 to obtain the index value corresponding to the Multi Carrier And MIMO Support.

The RNC parses the received RRC Connection Request message, and according to the Multi Carrier And MIMO Support cell in the message, it can acquire the number of downlink carriers configured as MIMO supported by the UE sending the message.

In the embodiment, a protocol description of the Multi Carrier And MIMO Support cell is as shown in Table 4 below.

**Table 4 Multi Carrier And MIMO Support cell protocol description**

| Information Element/ Group name | Need | Multi | Type and reference | Semantics description |
|---|---|---|---|---|
| Multi Carrier And MIMO Support | OP | | Integer (0..64) | The absence of this IE indicates that the UE does not support Multi carrier |

Wherein, the value of the Multi Carrier And MIMO Support cell corresponds to the capability of the UE supporting the multi-carrier and the number of downlink carriers configured as MIMO, as shown in Table 5 below.

**Table 5 Multi Carrier And MIMO Support value rule**

| Multi Carrier And MIMO Support | Total Number of DL Carriers | Total Number of DL Carriers in which MIMO is configured |
|---|---|---|
| 0 | 3 | 0 |
| 1 | 3 | 1 |
| 2 | 3 | 2 |
| 3 | 3 | 3 |
| 4 | 4 | 0 |
| 5 | 4 | 1 |
| 6 | 4 | 2 |
| 7 | 4 | 3 |
| 8 | 4 | 4 |

If the UE does not support the multi-carrier, the Multi Carrier And MIMO Support cell is not contained by the UE in the RRC Connection Request message sent to the RNC.

### Embodiment five

In the embodiment, a grade of an HS-DSCH physical layer category is extended, and a capability grade of a UE supporting the multi-carrier and MIMO is appended, for example, the UE supports 4 multi-carriers and 4 downlink carriers all can be configured as the capability grade of MIMO.

As shown in FIG. 5, the method for transmitting the capability of the UE supporting the multi-carrier in the embodiment is described as follows.

If the UE supports the multi-carrier and MIMO capability, the extended HS-DSCH physical layer category is contained by the UE in RRC Connection Setup Complete message sent to an RNC, and the extended grade of the HS-DSCH physical layer category is used to indicate the capability of the UE supporting the multi-carrier and supporting the number of downlink carriers configured as MIMO.

The RNC parses the received RRC Connection Setup Complete message, and according to the extended HS-DSCH physical layer category contained in the message, it can acquire the number of downlink carriers configured as MIMO supported by the UE sending the message.

Wherein, the extended HS-DSCH physical layer category refers to increasing values of the category, in the current R9 protocol, the values of the category have been extended to 28, and thus, the category in the present invention can take a value greater than 28 to indicate the capability of the UE supporting the multi-carrier and supporting the number of downlink carriers configured as MIMO.

Table 6 shows indexes of the values corresponding to the values of the category corresponding to the capability of the UE supporting the multi-carrier and the number of downlink carriers configured as MIMO below.

**Table 6 HS-DSCH physical layer category value index**

| HS-DSCH category | Total Number of DL Carriers | Total Number ofDL Carriers in which MIMO is configured |
|---|---|---|
| 29 | 3 | 0 |
| 30 | 3 | 1 |
| 31 | 3 | 2 |
| 32 | 3 | 3 |
| 33 | 4 | 0 |
| 34 | 4 | 1 |
| 35 | 4 | 2 |
| 36 | 4 | 3 |
| 37 | 4 | 4 |

### Embodiment six

The embodiment is similar to the above embodiment five, similarly, the grade of the HS-DSCH physical layer category is also extended, and the capability grade of the UE supporting the multi-carrier and the number of downlink carriers configured as MIMO is appended. Unlike the embodiment five, as shown in FIG. 6, in the current embodiment, the RNC is informed of the capability of the UE supporting the multi-carrier and supporting the number of downlink carriers configured as MIMO through UE Capability Information message.

As shown in FIG. 6, if the UE supports the multi-carrier capability, the extended HS-DSCH physical layer category is contained by the UE in the UE Capability Information message sent to an RNC, the extended grade of the HS-DSCH physical layer category is used to indicate the capability of the UE supporting the multi-carrier and supporting the number of downlink carriers configured as MIMO, and how to perform the indication specifically is the same as that in the embodiment four, which will not be repeated here.

Correspondingly, a system for transmitting the capability of a terminal supporting multi-carrier multiple-input multiple-output on which the above embodiments are based includes: a UE and an RNC, the UE further includes a multi-carrier capability transmission unit, and the RNC further includes a multi-carrier capability acquisition unit and a resource allocation unit, wherein:
the multi-carrier capability transmission unit is configured to: carry the capability of the UE, which supports the multi-carrier, supporting the number of downlink carriers configured as MIMO in interaction message with the RNC to send to the RNC;
the multi-carrier capability acquisition unit is configured to: according to the interaction message, acquire the capability of the UE supporting the number of downlink carriers configured as MIMO to send to the resource allocation unit; and
the resource allocation unit is configured to: according to the capability of the UE supporting the number of downlink carriers configured as MIMO acquired by the multi-carrier capability acquisition unit, allocate resources for the UE.

Furthermore, the multi-carrier capability transmission unit can be configured to send the capability of the UE supporting the number of downlink carriers configured as MIMO to the RNC by the following way:
adding an indication cell for the capability of the UE supporting the number of downlink carriers configured as MIMO in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

In addition, another object of the present invention is to provide a relocation method, in the process of a UE performs a relocation between two RNCs, a source radio network access system transmits the capability of the UE supporting the number of downlink carriers configured as MIMO to a destination radio network access system directly or through a core network.

Wherein, when the UE supports the multi-carrier, and after the source radio network access system of the UE acquires the capability of the UE supporting the number of downlink carriers configured as MIMO, with regard to the two cases that the relocation process of the UE needs to go through the core network or does not need to go through the core network, the relocation method provided by the present invention is described as follows.

One, when the relocation process of the UE between the two RNCs needs to go through the core network, the source radio network access system initiates relocation requirement message to the core network, a transparent container from a source radio network controller to a destination radio network controller is carried in the relocation requirement message, and the transparent container from the source radio network controller to the destination radio network controller includes a radio resource control container to which the above capability of the UE supporting the number of downlink carriers configured as MIMO is added;
the core network initiates relocation request message to the destination radio network access system, the transparent container from the source radio network controller to the destination radio network controller is carried in the relocation request message, and the transparent container from the source radio network controller to the destination radio network controller includes the radio resource control container to which the above capability of the UE supporting the number of downlink carriers configured as MIMO is added.

Two, when the UE performs the relocation between two RNCs directly without going through the core network, the source radio network access system initiates relocation request message to the destination radio network access system, a transparent container from a source radio network controller to a destination radio network controller is carried in the relocation request message, and the transparent container from the source radio network controller to the destination radio network controller includes a radio resource control container to which the above capability of the UE supporting the number of downlink carriers configured as MIMO is added.

The above relocation method will be further described in detail in combination with the accompanying drawings and specific embodiments below.

### Embodiment seven

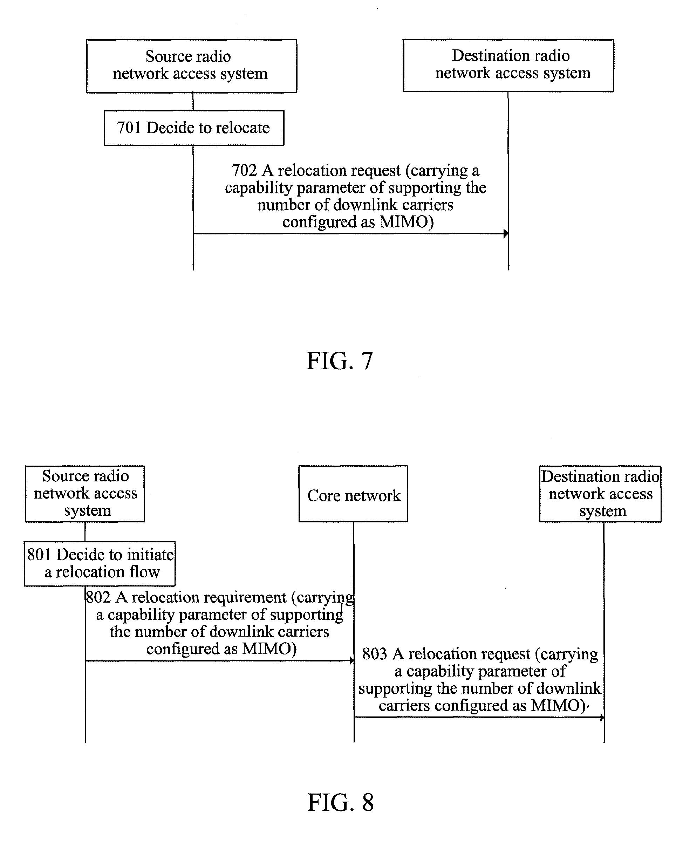

The embodiment is for the method for carrying the above capacity parameters of supporting the number of downlink carriers configured as MIMO when a source radio network access system and a destination radio network access system perform a message interaction directly after the network is flattened inside a UMTS, as shown in FIG. 7, the method is described as follows:
in step 701, the source radio network access system decides to initiate a relocation flow
in step 702, the source radio network access system initiates relocation request message to the destination radio network access system, a transparent container from a source radio network controller to a destination radio network controller is carried in the relocation request message, and the transparent container from the source radio network controller to the destination radio network controller includes a radio resource control container to which the above capability parameters of supporting the number of downlink carriers configured as MIMO are added.

In the embodiment, the capability parameters of supporting the number of downlink carriers configured as MIMO can be acquired by using any way in the embodiments one, two, three, four, five or six of the present invention, which includes but is not limited to the above ways.

### Embodiment eight

The embodiment is the method for carrying the capacity of supporting the number of downlink carriers configured as MIMO when a source radio network access system performs a message interaction with a destination radio network access system through a core network inside a UMTS, as shown in FIG. 8, the method is described as follows:
in step 801, the source radio network access system decides to initiate a relocation flow;
in step 802, the source radio network access system initiates relocation requirement message to the core network, a transparent container from a source radio network controller to a destination radio network controller is carried in the relocation requirement message, and the transparent container from the source radio network controller to the destination radio network controller includes a radio resource control container to which the above capability parameters of supporting the number of downlink carriers configured as MIMO are added;
in step 803, the core network initiates relocation request message to the destination radio network access system, the transparent container from the source radio network controller to the destination radio network controller is carried in the relocation request message, and the transparent container from the source radio network controller to the destination radio network controller includes the radio resource control container to which the above capability parameters of supporting the number of downlink carriers configured as MIMO are added.

In the embodiment, the capability parameters of supporting the number of downlink carriers configured as MIMO can be acquired by using any way in the embodiments one, two, three, four, five or six of the present invention, which includes but is not limited to the above ways.

Correspondingly, a relocation system on which the above embodiments are based includes: a source radio network access system, a core network and a destination radio network access system, the source radio network access system further includes a multi-carrier capability transmission unit, and the destination radio network access system further includes a multi-carrier capability acquisition unit, wherein:
the multi-carrier capability transmission unit is configured to: after the capability of a UE, which supports multi-carrier, supporting the number of downlink carriers configured as MIMO is acquired and when a relocation is decided to initiate, initiate relocation requirement message to the core network, or initiate relocation request message to the destination radio network access system, and add the capability of the UE supporting the number of downlink carriers configured as MIMO in a radio resource control container contained in a transparent container from a source radio network controller to a destination radio network controller carried in the relocation requirement message or relocation request message;
the core network is configured to: after receiving the relocation requirement message, initiate the relocation request message to the destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message initiated by the source radio network access system or core network, acquire the capability of the UE supporting the number of downlink carriers configured as MIMO.

In addition, another object of the present invention is to provide an inter-system handover method, if a UE supports the multi-carrier, and after the source radio network access system of the UE acquires the capability of the UE supporting the number of downlink carriers configured as MIMO, when the UE hands over from a GSM system or an LTE system to a UMTS, the source radio network access system in the GSM or LTE system transmits the capability of the UE supporting the number of downlink carriers configured as MIMO to a destination radio network access system of the UMTS.

When the UE hands over from the GSM to UMTS, the method for the GSM transmitting the capability of the UE supporting the number of downlink carriers configured as MIMO to the UMTS is specifically:
a core network initiating relocation request message, which carries a transparent container from a source radio network controller to a destination radio network controller, to the destination radio network access system, and the transparent container from the source radio network controller to the destination radio network controller including a radio resource control container to which the above capability of the UE supporting the number of downlink carriers configured as MIMO is added.

When the UE hands over from the LTE system to UMTS, the method for the LTE system transmitting the capability of the UE supporting the number of downlink carriers configured as MIMO to the UMTS is specifically:
the core network initiating the relocation request message, which carries the transparent container from the source radio network controller to the destination radio network controller, to the destination radio network access system, and the transparent container from the source radio network controller to the destination radio network controller including the radio resource control container to which the above capability of the UE supporting the number of downlink carriers configured as MIMO is added.

The above inter-system handover method will be further described in detail in combination with the accompanying drawings and specific embodiments below.

### Embodiment nine

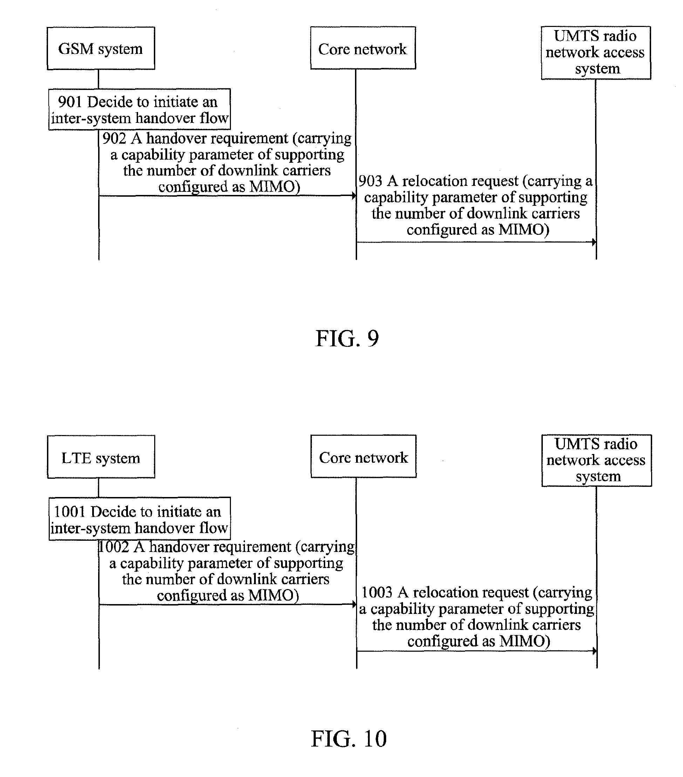

In the embodiment, a core network initiates relocation request message to a destination radio network access system, an inter-system handover needs to be performed, a transparent container from a source radio network controller to a destination radio network access system is carried in the relocation request message, and the transparent container from the source radio network controller to the destination radio network controller includes a radio resource control container to which the above capability parameters of supporting the number of downlink carriers configured as MIMO are added. As shown in FIG. 9, the method is described as follows:
in step 901, a GSM system decides to initiate a handover flow to a UMTS;
in step 902, the GSM system initiates handover requirement message for performing a handover to the UMTS to a core network, and capability parameters of supporting the number of downlink carriers configured as MIMO are carried in the handover requirement message;
in step 903, the core network initiates relocation request message to a destination radio network access system, a transparent container from a source radio network controller to a destination radio network access system is carried in the relocation request message, and the transparent container from the source radio network controller to the destination radio network controller includes a radio resource control container to which the above capability parameters of supporting the number of downlink carriers configured as MIMO are added.

In the embodiment, the capability parameters of supporting the number of downlink carriers configured as MIMO are acquired by using any way in the embodiments one, two, three, four, five or six of the present invention, which includes but is not limited to the above ways.

Correspondingly, an inter-system handover device on which the embodiment is based includes: a GSM system, a core network and a UMTS radio network access system, wherein, the GSM system further includes a multi-carrier capability transmission unit, and the UMTS radio network access system further includes a multi-carrier capability acquisition unit,
the multi-carrier capability transmission unit is configured to: initiate a handover requirement message to the core network, and add the capability of a UE supporting the number of downlink carriers configured as MIMO in a radio resource control container contained in a transparent container from a source radio network controller to a destination radio network controller carried in the handover requirement message;
the core network is configured to: after receiving the handover requirement message, initiate relocation request message to a destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message, acquire the capability of the UE supporting the number of downlink carriers configured as MIMO.

### Embodiment ten

In the embodiment, a core network initiates handover requirement message to a destination radio network access system, an inter-system handover needs to be performed, a transparent container from a source radio network controller to a destination radio network access system is carried in the handover requirement message, and the transparent container from the source radio network controller to the destination radio network controller includes a radio resource control container to which the above capability parameters of supporting the number of downlink carriers configured as MIMO are added. As shown in FIG. 10, the method is described as follows:
in step 1001, an LTE system decides to initiate a handover flow to a UMTS;
in step 1002, the LTE system initiates handover requirement message for performing a handover to the UMTS to a core network, and capability parameters of supporting the number of downlink carriers configured as MIMO are carried in the handover requirement message;
in step 1003, the core network initiates relocation request message to a destination radio network access system, a transparent container from a source radio network controller to a destination radio network access system is carried in the relocation request message, and the transparent container from the source radio network controller to the destination radio network controller includes a radio resource control container to which the above capability parameters of supporting the number of downlink carriers configured as MIMO are added.
In the embodiment, the capability parameters of supporting the number of downlink carriers configured as MIMO are acquired by using any way in the embodiments one, two, three, four, five or six of the present invention, which includes but is not limited to the above ways.

Correspondingly, an inter-system handover device on which the embodiment is based includes: an LTE system, a core network and a UMTS radio network access system, wherein, the LTE system further includes a multi-carrier capability transmission unit, and the UMTS radio network access system further includes a multi-carrier capability acquisition unit,
the multi-carrier capability transmission unit is configured to: initiate a handover requirement message to the core network, and add the capability of a UE supporting the number of downlink carriers configured as MIMO in a radio resource control container contained in a transparent container from a source radio network controller to a destination radio network controller carried in the handover requirement message;
the core network is configured to: after receiving the handover requirement message, initiate relocation request message to a destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message, acquire the capability of the UE supporting the number of downlink carriers configured as MIMO.

The above description is only the preferred embodiments of the present invention, which is not used to limit the protection scope of the present invention. All the modifications, equivalent substitutions, and improvements, etc. made within the spirit and principle of the present invention shall fall into the protection scope of the present invention.

### Industrial Applicability

Compared with the related art, with the method and system of the present invention, a network side is enabled to acquire the capability of the UE supporting the number of downlink carriers configured as MIMO and allocate the resources reasonably according to the capability; and
when the UE performs a relocation between two RNCs, or the UE hands over from a GSM system to a UMTS system or hands over from an LTE system to the UMTS system, the relocated or handed-over destination network side knows accurately the number of downlink carriers configured as MIMO supported by the UE and allocates the resources reasonably according to it.

## Claims

1. A method for transmitting a capability of a terminal supporting multi-carrier multiple-input multiple-output, comprising:
when a User Equipment (UE) supports multi-carrier, carrying a capability of the UE supporting a number of downlink carriers configured as Multiple-Input Multiple-Output (MIMO) in interaction message with a Radio Network Controller (RNC) to send to the RNC; and
the RNC acquiring the capability of the UE supporting the number of downlink carriers configured as MIMO according to the interaction message, and allocating resources for the UE according to the acquired capability of the UE supporting the number of downlink carriers configured as MIMO;
wherein, the UE supporting the multi-carrier refers to: the UE supporting 3-carrier or 4-carrier.

2. The method according to claim 1, wherein,
The interaction message comprises: radio resource control connection request message, radio resource control connection setup complete message and UE capability information message.

3. The method according to claim 2, wherein,
the step of carrying the capability of the UE supporting a number of downlink carriers configured as MIMO in interaction message with an RNC to send to the RNC comprises:
adding an indication cell in the radio resource control connection request message, and carrying the capability of the UE supporting the number of downlink carriers configured as MIMO through the indication cell.

4. The method according to claim 3, wherein,
The indication cell is a Multi MIMO Support cell, or a Dual cell MIMO support extension cell, or a Multi Carrier and MIMO Support cell;
the step of adding an indication cell in the radio resource control connection request message, and carrying the capability of the UE supporting the number of downlink carriers configured as MIMO through the indication cell comprises:
carrying the Multi MIMO Support cell in the radio resource control connection request message to indicate the number of the downlink carriers configured as MIMO supported by the UE; or
carrying the Dual cell MIMO support extension cell in the radio resource control connection request message to indicate that the number of the downlink carriers configured as MIMO supported by the UE is 3 or 4; or
carrying the Multi Carrier and MIMO Support cell in the radio resource control connection request message to indicate the capability of the UE supporting the multi-carrier and supporting the number of the downlink carriers configured as MIMO.

5. The method according to claim 2, wherein,
the step of carrying the capability of the UE supporting a number of downlink carriers configured as MIMO in interaction message with an RNC to send to the RNC comprises:
extending a Dual cell MIMO support cell in the radio resource control connection request message, and carrying the capability of the UE supporting the number of downlink carriers configured as MIMO through the extended Dual cell MIMO support cell.

6. The method according to claim 2, wherein,
the step of carrying the capability of the UE supporting the number of downlink carriers configured as MIMO in interaction message with an RNC to send to the RNC comprises:
extending a grade of a High-Speed Downlink Shared Channel (HS-DSCH) physical layer category in the radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

7. A system for transmitting a capability of a terminal supporting multi-carrier multiple-input multiple-output, comprising: a UE and an RNC, where the UE comprises a multi-carrier capability transmission unit, and the RNC comprises a multi-carrier capability acquisition unit and a resource allocation unit, wherein:
the multi-carrier capability transmission unit is configured to: when the UE supports multi-carrier, carry a capability of the UE supporting a number of downlink carriers configured as MIMO in interaction message with the RNC to send to the RNC;
the multi-carrier capability acquisition unit is configured to: according to the interaction message, acquire the capability of the UE supporting the number of downlink carriers configured as MIMO to send to the resource allocation unit; and
the resource allocation unit is configured to: according to the capability of the UE supporting the number of downlink carriers configured as MIMO acquired by the multi-carrier capability acquisition unit, allocate resources for the UE;
wherein, the UE supporting the multi-carrier refers to: the UE supporting 3-carrier or 4-carrier.

8. The system according to claim 7, wherein,
The multi-carrier capability transmission unit is configured to send the capability of the UE supporting the number of downlink carriers configured as MIMO to the RNC by the following way:
adding an indication cell in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

9. A relocation method, comprising:
when a source radio network access system where a UE supporting multi-carrier is located acquires a capability of the UE supporting a number of downlink carriers configured as MIMO and decides to initiate a relocation, initiating relocation requirement message to a core network, or initiating relocation request message to a destination radio network access system, and adding the capability of the UE supporting the number of downlink carriers configured as MIMO in a radio resource control container contained in a transparent container from a source radio network controller to a destination radio network controller carried in the relocation requirement message or relocation request message;
if the core network receives the relocation requirement message, initiating the relocation request message to the destination radio network access system, and containing the capability of the UE supporting the number of downlink carriers configured as MIMO in the radio resource control container contained in the transparent container from the source radio network controller to the destination radio network controller carried in the relocation request message; and
the destination radio network access system acquiring the capability of the UE supporting the number of downlink carriers configured as MIMO according to the relocation request message initiated by the source radio network access system or core network;
wherein, the multi-carrier is 3-carrier or 4-carrier.

10. The method according to claim 9, further comprising: the source radio network access system acquiring the capability of the UE supporting the number of downlink carriers configured as MIMO by the following way:
when the UE supports the 3-carrier or 4-carrier, carrying the capability of the UE supporting the number of downlink carriers configured as MIMO in interaction message with an RNC to send to the source radio network access system;
the source radio network access system acquiring the capability of the UE supporting the number of downlink carriers configured as MIMO according to the interaction message.

11. The method according to claim 10, wherein,
the step of carrying the capability of the UE supporting the number of downlink carriers configured as MIMO in interaction message with an RNC to send to the source radio network access system comprises:
adding an indication cell in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

12. A relocation system, comprising: a source radio network access system, a core network and a destination radio network access system, where the source radio network access system comprises a multi-carrier capability transmission unit, and the destination radio network access system comprises a multi-carrier capability acquisition unit, wherein:
the multi-carrier capability transmission unit is configured to: when a capability of a UE, which supports multi-carrier, supporting a number of downlink carriers configured as MIMO is acquired and a relocation is decided to initiate, initiate relocation requirement message to the core network, or initiate relocation request message to the destination radio network access system, and add the capability of the UE supporting the number of downlink carriers configured as MIMO in a radio resource control container contained in a transparent container from a source radio network controller to a destination radio network controller carried in the relocation requirement message or relocation request message;
the core network is configured to: if the relocation requirement message is received, initiate the relocation request message to the destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message initiated by the source radio network access system or core network, acquire the capability of the UE supporting the number of downlink carriers configured as MIMO;
wherein, the multi-carrier is 3-carrier or 4-carrier.

13. An inter-system handover method, applied to a case of a UE handing over from a Global System for Mobile Communications (GSM) to a Universal Mobile Telecommunications System (UMTS) radio network access system, comprising:
the GSM system initiating handover requirement message to a core network, and adding a capability of the UE supporting a number of downlink carriers configured as MIMO in a radio resource control container contained in a transparent container from a source radio network controller to a destination radio network controller carried in the handover requirement message;
the core network initiating relocation request message to the UMTS radio network access system after receiving the handover requirement message, and containing the capability of the UE supporting the number of downlink carriers configured as MIMO in the radio resource control container contained in the transparent container from the source radio network controller to the destination radio network controller carried in the relocation request message; and
the UMTS radio network access system acquiring the capability of the UE supporting the number of downlink carriers configured as MIMO according to the relocation request message.

14. The method according to claim 13, further comprising:
the GSM system acquiring the capability of the UE supporting the number of downlink carriers configured as MIMO by the following way:
when the UE supports multi-carrier, carrying the capability of the UE supporting the number of downlink carriers configured as MIMO in interaction message with an RNC to send to the GSM system;
the GSM system acquiring the capability of the UE supporting the number of downlink carriers configured as MIMO according to the interaction message;
wherein, the UE supporting the multi-carrier refers to: the UE supporting 3-carrier or 4-carrier.

15. The method according to claim 14, wherein,
the step of carrying the capability of the UE supporting the number of downlink carriers configured as MIMO in interaction message with an RNC to send to the GSM system comprises:
adding an indication cell in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

16. An inter-system handover device, applied to a case of a UE handing over from a GSM system to a UMTS radio network access system, comprising: a GSM system, a core network and a UMTS radio network access system, wherein, the system comprises a multi-carrier capability transmission unit, and the UMTS radio network access system comprises a multi-carrier capability acquisition unit,
the multi-carrier capability transmission unit is configured to: initiate handover requirement message to the core network, and add a capability of the UE supporting a number of downlink carriers configured as MIMO in a radio resource control container contained in a transparent container from a source radio network controller to a destination radio network controller carried in the handover requirement message;
the core network is configured to: after receiving the handover requirement message, initiate relocation request message to a destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message, acquire the capability of the UE supporting the number of downlink carriers configured as MIMO.

17. An inter-system handover method, applied to a case of a UE handing over from a Long Term Evolution (LTE) system to a UMTS radio network access system, comprising:
the LTE system initiating handover requirement message to a core network, adding a capability of the UE supporting a number of downlink carriers configured as MIMO in a radio resource control container contained in a transparent container from a source radio network controller to a destination radio network controller carried in the handover requirement message;
the core network initiating relocation request message to the UMTS radio network access system after receiving the handover requirement message, and containing the capability of the UE supporting the number of downlink carriers configured as MIMO in the radio resource control container contained in the transparent container from the source radio network controller to the destination radio network controller carried in the relocation request message; and
the UMTS radio network access system acquiring the capability of the UE supporting the number of downlink carriers configured as MIMO according to the relocation request message.

18. The method according to claim 17, further comprising:
the LTE system acquiring the capability of the UE supporting the number of downlink carriers configured as MIMO by the following way:
when the UE supports multi-carrier, carrying the capability of the UE supporting the number of downlink carriers configured as MIMO in interaction message with an RNC to send to the LTE system; and
the LTE system acquiring the capability of the UE supporting the number of downlink carriers configured as MIMO according to the interaction message;
wherein, the UE supporting the multi-carrier refers to: the UE supporting 3-carrier or 4-carrier.

19. The method according to claim 18, wherein,
the step of carrying the capability of the UE supporting the number of downlink carriers configured as MIMO in interaction message with an RNC to send to the LTE system comprises:
adding an indication cell in radio resource control connection request message, and carrying the capability of the UE supporting the number of downlink carriers configured as MIMO through the indication cell; or,
extending a Dual cell MIMO support cell in the radio resource control connection request message, and carrying the capability of the UE supporting the number of downlink carriers configured as MIMO through the extended Dual cell MIMO support cell; or,
extending a grade of an HS-DSCH physical layer category in radio resource control connection setup complete message or UE capability information message, appending a capability grade of the UE supporting the number of downlink carriers configured as MIMO, and carrying the capability of the UE supporting the number of downlink carriers configured as MIMO through the extended grade of the HS-DSCH physical layer category.

20. An inter-system handover device, applied to a case of a UE handing over from an LTE system to a UMTS radio network access system, comprising: an LTE system, a core network and a UMTS radio network access system, wherein, the LTE system comprises a multi-carrier capability transmission unit, and the UMTS radio network access system comprises a multi-carrier capability acquisition unit,
the multi-carrier capability transmission unit is configured to: initiate handover requirement message to the core network, and add a capability of the UE supporting a number of downlink carriers configured as MIMO in a radio resource control container contained in a transparent container from a source radio network controller to a destination radio network controller carried in the handover requirement message;
the core network is configured to: after receiving the handover requirement message, initiate relocation request message to a destination radio network access system, and contain the capability of the UE supporting the number of downlink carriers configured as MIMO in the radio resource control container contained in the transparent container from the source radio network controller to the destination radio network controller carried in the relocation request message; and
the multi-carrier capability acquisition unit is configured to: according to the relocation request message, acquire the capability of the UE supporting the number of downlink carriers configured as MIMO.
